# FASCICULE DE BREVET EUROPEEN

(11) **EP 1 334 616 B1**
(45) Date de publication et mention de la délivrance du brevet: **11.04.2007**
(21) Numéro de dépôt: 01983719.4
(22) Date de dépôt: 12.11.2001
(51) Int. Cl.: H04N 7/16, G07F 7/02

(54) **METHODE D'INCITATION DE MISE A JOUR D'UN PRODUIT EVOLUTIF**
BESTIMMUNGSVERFAHREN ZUR AKTUALISIERUNG EINES SKALIERBAREN PRODUKTES
METHOD FOR INDUCING UPGRADING OF AN EXPANDABLE PRODUCT

(30) Priorité: 13.11.2000 CH 220100
(43) Date de publication de la demande: 13.08.2003
(73) Titulaire: Nagracard S.A., 1033 Cheseaux-sur-Lausanne (CH)
(72) Inventeur: GAUMAIN, Serge, CH-1400 Yverdon (CH)
(74) Mandataire: Wenger, Joel-Théophile
(86) Numéro de dépôt international: PCT/IB2001/002130
(87) Numéro de publication internationale: WO 2002/039740

(56) Documents cités:
- WO-A-00/01149
- WO-A-00/46993
- GB-A- 2 321 753

## Description

La présente invention concerne une méthode pour la mise à jour de produit évolutif, en particulier dans le domaine des cartes à puces.

Tous les opérateurs utilisant des systèmes électroniques et informatiques sont confrontés à la mise à jour de leurs produits et la gestion de la comptabilité entre les différentes versions. Ce thème est d'autant plus important que le nombre de ces produits est grand et distribué à large échelle.

Dans la mesure où ces produits sont reliés, même sporadiquement, à un centre de contrôle, la première approche des opérateurs a été de rendre le logiciel modifiable par téléchargement. Cette technique a été rendue possible grâce aux mémoires EEPROM ou Flash acceptant la re-programmation et ne nécessitant pas d'alimentation permanente.

Ainsi, lors de l'apparition de nouvelles fonctions, le téléchargement du nouveau logiciel dans ces produits permettait aux utilisateurs de bénéficier de ces fonctionnalités sans devoir retourner leurs produits à un quelconque centre technique.

Dans une configuration à sens unique, c'est-à-dire dans laquelle seule la liaison entre opérateur et utilisateur est possible, il est difficile, voire impossible de déterminer si tous les utilisateurs ont reçu la mise à jour.

C'est ainsi que les opérateurs sont condamnés à assumer la comptabilité avec plusieurs versions en parallèle afin que les utilisateurs n'ayant pas reçu la mise à jour puissent bénéficier du service proposé.

Ce cas de figure peut être encore accentué lors de changement de génération de produit c'est-à-dire qu'un remplacement physique du produit est nécessaire.

Pour cela, les opérateurs envoient aux utilisateurs la nouvelle génération du produit avec l'invitation d'utiliser ce nouveau produit en lieu et place du précédant.

Lorsqu'il s'agit d'un opérateur proposant un service payant, il lui est très difficile d'imposer l'utilisation du nouveau produit en supprimant toute compatibilité avec l'ancien. Ceci aurait pour conséquence de créer un mécontentement dans sa clientèle qui se sent peu concernée par des considérations d'ordre techniques.

C'est pourquoi les opérateurs sont aujourd'hui contraints, de peur de décevoir leur clientèle, d'assurer non seulement la compatibilité entre les versions logiciels mais également entre les générations matérielles. Cette compatibilité coûte cher en terme de bande passante lors de la communication avec les produits car les commandes doivent être envoyées selon tous les critères des différentes versions.

Le but de la présente invention est une méthode qui incite l'utilisateur à procéder à la mise à jour de son produit dès que possible et non lorsque le centre cesse de supporter la version utilisée par l'utilisateur provoquant l'arrêt de l'utilisation du service.

Ce but est atteint par une méthode consistant à déterminer la version courante du produit de l'utilisateur, et de comparer cette version avec la version minimale visée, et si la version de l'utilisateur est antérieure à la version minimale, provoquer une indication visuelle temporaire chez l'utilisateur.

Selon un exemple d'application, le produit est une carte à puce servant au contrôle d'accès d'une télévision à péage. Cette carte permet de fournir les informations nécessaires pour décrypter le flux numérique et gère les abonnements aux différents services offerts par l'opérateur. Cette carte est connectée à un décodeur de télévision à péage qui envoie les signaux décodés à un écran de visualisation. Le processus visant à convaincre l'utilisateur de changer sa carte est initiée par le centre de contrôle qui envoie, par les voies classiques de communication, une commande de d'invitation à la mise à jour aux décodeurs d'abonnés.

Ainsi, selon l'invention, la prestation à l'utilisateur n'est pas interrompue mais momentanément perturbée afin d'inciter l'utilisateur à changer sa carte pour une version plus récente.

Selon une première forme de réalisation, cette perturbation ou avertissement est réalisé par l'affichage d'un message sur l'écran de visualisation pendant une courte période afin de rappeler à l'utilisateur de procéder à l'échange de sa carte.

Cette apparition peut se faire sur commande de la carte elle-même et se répéter. La fréquence de répétition peut varier dans le temps pour que la l'avertissement devienne gênant pour l'utilisateur. Ainsi par exemple, d'une apparition par jour, elle sera augmentée à une apparition par heure si aucune action n'est prise par l'utilisateur.

Cet avertissement est également avantageusement effectué lors de la mise en route du décodeur.

En lieu et place d'un message textuel, il est possible d'afficher un pictogramme, voire même une suite d'images décrivant les étapes pour changer la carte.

Selon une variante de l'invention, cet avertissement n'est pas réalisé sous la forme d'un message mais sous la forme d'une simulation d'une rupture momentanée de réception. Tout ou partie de l'écran de visualisation est brièvement brouillé avec un effet marquant sur l'utilisateur. Il sera alors disposé à remplacer sa carte dans les plus brefs délais pour ne plus voir des images disparaître devant lui.

Un moyen simple pour réaliser cette fonction est d'utiliser les mots de contrôle ("Control Words") nécessaires pour décrypter le flux numérique. Ces mots de contrôle sont calculés par la carte, justement celle qui doit être remplacée. Il est alors possible pour cette dernière de ne pas fournir un mot et provoquer le brouillage de l'écran, le décodeur étant incapable de décrypter le flux numérique.

Alternativement, ce mot de contrôle peut être fourni avec un retard durant lequel l'écran sera brouillé.

Il est possible de mélanger les deux moyens d'avertissement, c'est-à-dire que si l'utilisateur n'a pas réagi à l'invitation faite sous forme d'un message, la méthode du brouillage de l'image vient confirmer la nécessité du changement.

D'autres aspects importants de l'invention sont la détermination d'une part de la version de la carte et d'autre part du moment pour effectuer l'avertissement.

Les cartes à puces utilisées dans les décodeurs de télévision à péage contiennent une base de données relationnelle. Une telle organisation est décrite dans le document EP 0 616 714 et nous indique que la base ne contient pas seulement des données mais contient également des programmes. Du fait de l'organisation relationnelle de ces informations (données et programmes), il est nécessaire d'effectuer une requête d'informations pour déterminer quel est l'état et la version de la base de données.

Pour ce qui est de déterminer le moment opportun pour avertir l'utilisateur, plusieurs critères doivent être pris en compte. Il est clair que si l'utilisateur est en train de visualiser un film qu'il aura acheté spécialement, il serait fort déplacé de venir perturber le plaisir de l'utilisateur pendant cette prestation. On choisira plus particulièrement des émissions comprises dans l'abonnement de base et à caractère émotionnel faible par opposition à une compétition sportive.

Le centre de contrôle, dans ce type d'implantation, ne se contente pas uniquement d'envoyer un numéro de version cible, comme condition minimale pour ne pas perturber l'écran de l'utilisateur. Il peut également conditionner cette version à la présence de certains programmes dans la base de données.

Dans le cas où le centre de contrôle recevrait des informations en retour des différents décodeurs, il lui est possible de déterminer lui-même les cartes nécessitant une mise à jour. Le centre de contrôle dispose de moyens pour adresser chaque carte nominativement pour lui commander le déclenchement du processus d'invitation au changement. Ce processus peut être interrompu soit par le changement effectif de la carte, soit sur commande du centre de contrôle.

D'autres formes d'avertissement, sonore par exemple peuvent également être utilisées dans le cadre de cette invention.

L'utilisation dans un système de télévision à péage n'est pas la seule application possible. La généralisation de services payants liés à Internet met en oeuvre également des modules de sécurité connectés aux ordinateurs des utilisateurs. Lorsque la nécessité d'un changement se fait sentir, par exemple pour intégrer de nouvelles fonctions ou changer d'algorithme de cryptage, le même problème se pose et la présente invention permet d'inciter l'utilisateur à procéder à l'échange d module de sécurité.

Cette incitation revêtira la forme d'un message sur l'écran, d'un son ou d'une animation graphique.

Une autre possibilité est de ralentir les performances du module de sécurité chaque fois qu'il est sollicité. On provoque ainsi un ralentissement des fonctions propres à ce module, ralentissement accompagné d'une missive indiquant à l'utilisateur le moyen de retrouver les performances d'origine.

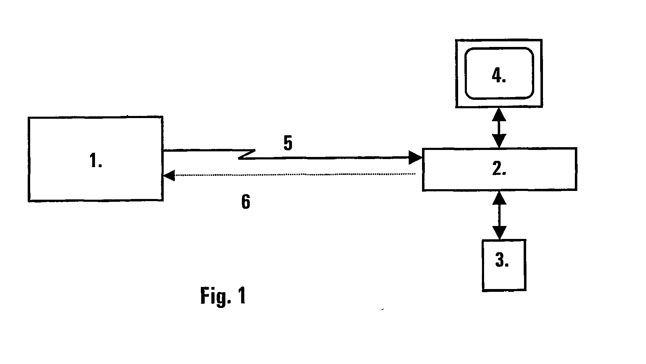

La figure unique illustre le système selon l'invention qui comprend un centre de contrôle 1 en liaison avec une ou des unités d'abonnés composées d'un récepteur/décodeur 2, d'un module de sécurité 3 et d'un écran de visualisation 4. Pour le bon fonctionnement des opérations ayant trait à la sécurité des données reçues 5, voire envoyées 6, le module de sécurité 3 est amené à fournir les clefs ou les cryptogrammes requis.

Une variante de l'invention consiste à inclure dans le message d'incitation de mise à jour une information indiquant à l'utilisateur qu'il bénéficiera de certains avantages ou services supplémentaires après le changement du module de sécurité. Ces avantages peuvent être par exemple sous forme d'un crédit supplémentaire, d'une visualisation gratuite d'un film ou d'une prolongation de la période d'abonnement.

Dans un système bidirectionnel (télévision à péage, Internet), la mise à jour du module est détectée par le centre de contrôle qui reçoit les données du nouveau module par l'intermédiaire de la voie de retour. Le centre de contrôle transmet ensuite les données nécessaires au module de sécurité permettant l'introduction des avantages ou des services supplémentaires.

Dans le cas d'un système sans voie de retour (unidirectionnel), le changement de module n'est pas détecté par le centre de contrôle. Le flux de données transmis par ce dernier contient alors des données spécifiques destinées au nouveau module qui comporte des fonctions aptes à fournir des avantages à l'utilisateur. Une variante de cette implémentation est possible par l'introduction de conditions d'octroi de services supplémentaires dans le module de sécurité. Dès sa mise en fonction, il vérifie les conditions d'accès donnant droit à ces services supplémentaires et si ces conditions sont remplies, accorde ces services. Ils peuvent avoir, par exemple, la forme d'un abonnement supplémentaire à une chaîne durant une durée limitée d'un mois.

## Revendications

1. Méthode pour favoriser le remplacement d'un module de sécurité d'une génération antérieure par celui d'une nouvelle génération dans une unité d'utilisateur connectée audit module de sécurité, **caractérisée en ce qu'**elle consiste à:
- recevoir d'un centre de contrôle, une commande d'incitation de remplacement incluant les caractéristiques minimales du module de sécurité de nouvelle génération,
- établir les caractéristiques du module de sécurité en cours d'utilisation et comparer avec les caractéristiques minimales définies dans la commande reçue, et selon le résultat de la comparaison,
- inciter l'utilisateur à remplacer le module sécurité par un avertissement

2. Méthode selon la revendication 1, **caractérisée en ce que** l'avertissement se fait sous la forme d'un message textuel sur tout ou partie d'un organe de visualisation inclus dans l'unité d'utilisateur.

3. Méthode selon la revendication 2, **caractérisée en ce que** l'avertissement contient des informations relatives à l'octroi de services supplémentaires transmis par le centre de contrôle, cet octroi étant déterminé selon des conditions de remplacement du module de sécurité.

4. Méthode selon la revendication 1, **caractérisée en ce que** l'avertissement se fait sous la forme d'une ou des images graphiques sur tout ou partie d'un organe de visualisation inclus dans l'unité d'utilisateur.

5. Méthode selon les revendications 1 à 4, **caractérisée en ce que** cet avertissement est accompagné d'un signal sonore, sous forme musicale ou sous forme de verbale.

6. Méthode selon les revendications 1 à 5, **caractérisée en ce que** le module de sécurité est une carte à puce contenant une base de données relationnelle et que l'établissement des caractéristiques du module de sécurité en cours d'utilisation est effectué par une requête de type relationnelle sur ladite base.

7. Méthode selon l'une des revendications précédentes, **caractérisée en ce que** l'avertissement est reproduit selon un cycle déterminé.

8. Méthode selon l'une des revendications précédentes, **caractérisée en que** l'avertissement est effectué par la création d'un temps de retard dans les informations fournies par le module de sécurité.

9. Méthode selon l'une des revendications précédentes, **caractérisée en ce que** l'unité d'utilisateur est un décodeur de télévision à péage et que le module de sécurité est responsable de la fourniture des clés de décryptage d'un flux de télévision à péage, et **en ce que** l'avertissement est effectué par l'interruption de la fourniture ou la modification desdites clés.

10. Méthode selon la revendication 9, **caractérisée en ce que** le flux de données comprend des indications sur la nature des émissions transmises et **en ce que** l'avertissement tient compte de la nature de ces émissions en cours de visualisation.

11. Méthode selon la revendication 1, **caractérisée en ce que** lors de l'introduction d'un nouveau module, ce dernier comprend des moyens pour transmettre un message d'initialisation au centre de contrôle contenant des conditions de remplacement, ledit centre de contrôle octroie l'accès à un ou des services supplémentaires.

12. Méthode selon la revendication 1, **caractérisée en ce que** le flux de données transmis par le centre de contrôle contient des messages spécifiques destinés à autoriser l'accès à un ou des services supplémentaires seulement si le module de sécurité a été mis à jour.

13. Méthode selon la revendication 1, **caractérisée en ce que** le module de sécurité contient des données relatives aux conditions d'octroi de services supplémentaires, dès sa mise en fonction, ledit module vérifie les conditions d'accès aux services supplémentaires et accorde ces services supplémentaires seulement si les conditions d'octroi sont remplies.

## Claims

1. Method for inducing upgrading of a security module of a previous generation for that of a new generation in a user's unit connected to said security module and receiving from a control centre a data stream defining a plurality of services, **characterised in that** it consists in:
- sending by the control centre in the data stream a replacement prompt command including the minimal characteristics of the security module of new generation;
- establishing the characteristics of the security module being used and comparing with the minimal characteristics defined in the received command, and according to the results of the comparison,
- prompting the user to replace the security module.

2. A method according to Claim 1, **characterised in that** the prompting is done in the form of a text message on all or part of a display included in the user's unit.

3. A method according to Claim 2, **characterised in that** the prompting contains information related to the granting of supplementary services transmitted by the control centre, said granting being determined by conditions of replacing the security module.

4. A method according to Claim 1, **characterised in that** the prompting is done in the form of one or several graphical images on all or part of a display included in the user's unit.

5. A method according to Claims 1 to 4, **characterised in that** this prompting is accompanied by a sonorous signal, in a musical or verbal form.

6. A method according to Claims 1 to 5, **characterised in that** the security module is a smart card containing a relational database and that the establishment of characteristics of the security module being used is done by a relational type request to said database.

7. A method according to any of the preceding Claims, **characterised in that** the prompting is reproduced according to a determined cycle.

8. A method according to any of the preceding Claims, **characterised in that** the prompting is carried out by creating a delay in the information supplied by the security module.

9. A method according to any of the preceding Claims, **characterised in that** the user's unit is a pay television decoder and that the security module is responsible for the supply of the decrypting keys of a pay television stream, and that the prompting is done by interrupting the supply of said keys or by modifying them.

10. A method according to Claim 9, **characterised in that** the data stream comprises indications on the nature of the transmitted programs and that the prompting takes into account the nature of these programs being seen.

11. A method according to Claim 1, **characterised in that** when introducing the new module, the latter comprises means to transmit an initialisation message to the control centre containing conditions of replacement, said control centre grants access to one or several supplementary services.

12. A method according to Claim 1, **characterised in that** the data stream transmitted by the control centre contains messages destined to authorise access to one or several supplementary services only if the security module is upgraded.

13. A method according to Claim 1, **characterised in that** the security module of the new generation contains data relating to the conditions of granting supplementary services, from its starting, said module checks access conditions to the supplementary services and allows these supplementary services only if the granting conditions are fulfilled.

## Patentansprüche

1. Verfahren zur Begünstigung des Ersatzes eines Sicherheitsmoduls einer älteren Generation durch den einer neuen Generation in einer Benutzereinheit, die an diesen Sicherheitsmodul angeschlossen ist und seitens zumindest eines Kontrollzentrums, durch das eine Mehrzahl von Diensten definiert werden, einen Datenstrom empfängt, wobei die Benutzereinheit zumindest ein Visualisierungsorgan umfasst, **dadurch gekennzeichnet, dass** es darin besteht:
- durch das Kontrollzentrum im Datenstrom einen Befehl zur Anregung des Austauschs zu übersenden, der die Mindestmerkmale des Sicherheitsmoduls der neuen Generation einschliesst,
- die Merkmale des in Benutzung befindlichen Sicherheitsmoduls festzustellen und sie mit den im empfangenen Befehl definierten Mindestmerkmalen zu vergleichen und je nach dem Ergebnis des Vergleichs
- durch Übersendung einer Mahnung auf dem Visualisierungsorgan einen Anreizzyklus zu initiieren.

2. Verfahren nach Anspruch 1, **dadurch gekennzeichnet, dass** die Mahnung in Gestalt einer Textnachricht auf dem ganzen oder einem Teil des Visualisierungsorgans erfolgt.

3. Verfahren nach Anspruch 2, **dadurch gekennzeichnet, dass** die Mahnung durch das Kontrollzentrum übermittelte Informationen bezüglich der Gewährung zusätzlicher Dienste enthält, wobei diese Gewährung je nach den Bedingungen des Austauschs des Sicherheitsmoduls festgelegt wird.

4. Verfahren nach Anspruch 1, **dadurch gekennzeichnet, dass** die Mahnung in Gestalt eines oder einer Anzahl von graphischen Bildern auf dem ganzen oder einem Teil des Visualisierungsorgans erfolgt.

5. Verfahren nach Ansprüchen 1 bis 4, **dadurch gekennzeichnet, dass** diese Mahnung von einem akustischen Signal in musikalischer oder gesprochener Form begleitet wird.

6. Verfahren nach Ansprüchen 1 bis 5, **dadurch gekennzeichnet, dass** der Sicherheitsmodul eine Chipkarte ist, die eine relationelle Datenbank enthält, und **dadurch**, dass die Feststellung der Eigenschaften des derzeit genutzten Sicherheitsmoduls durch eine Anforderung des relationellen Typs an die Datenbank erfolgt.

7. Verfahren nach einem der vorangehenden Ansprüche, **dadurch gekennzeichnet, dass** die Mahnung nach einem festgelegten Zyklus wiederholt wird.

8. Verfahren nach einem der vorangehenden Ansprüche, **dadurch gekennzeichnet, dass** die Mahnung durch die Schaffung einer Verzögerung in den durch den Sicherheitsmodul zur Verfügung gestellten Daten erfolgt.

9. Verfahren nach einem der vorangehenden Ansprüche, **dadurch gekennzeichnet, dass** die Benutzereinheit ein Gebührenfernsehdekoder ist und dass der Sicherheitsmodul für die Lieferung von Schlüsseln für die Entschlüsselung eines Gebührenfernseh-Datenstroms verantwortlich ist, und **dadurch**, dass die Mahnung durch eine Unterbrechung der Lieferung oder durch eine Modifizierung dieser Schlüssel erfolgt.

10. Verfahren nach Anspruch 9, **dadurch gekennzeichnet, dass** der Datenstrom Hinweise auf die Natur der übermittelten Sendungen umfasst, und **dadurch**, dass die Mahnung die Natur dieser gerade visualisierten Sendungen berücksichtigt.

11. Verfahren nach Anspruch 1, **dadurch gekennzeichnet, dass** bei Einführung eines neuen Moduls der Modul Mittel umfasst, um dem Kontrollzentrum eine Initialisierungsnachricht zu übermitteln, die Austauschbedingungen enthält, und das Kontrollzentrum Zugriff auf einen oder eine Anzahl zusätzlicher Dienste gewährt.

12. Verfahren nach Anspruch 1, **dadurch gekennzeichnet, dass** der durch das Kontrollzentrum übermittelte Datenstrom spezifische Nachrichten enthält, die dafür bestimmt sind, den Zugriff auf einen oder eine Anzahl zusätzlicher Dienste nur dann zu gewähren, wenn der Sicherheitsmodul aktualisiert worden ist.

13. Verfahren nach Anspruch 1, **dadurch gekennzeichnet, dass** der Sicherheitsmodul Daten bezüglich der Bedingungen für die Gewährung zusätzlicher Dienste enthält, der Modul gleich nach seiner Inbetriebsetzung die Bedingungen für den Zugriff auf die zusätzlichen Dienste überprüft und diese zusätzlichen Dienste nur einräumt, wenn die Bedingungen der Gewährung erfüllt sind.
